# EUROPEAN PATENT APPLICATION

(11) **EP 2 924 009 A1**
(43) Date of publication of application: **30.09.2015**
(21) Application number: 13856611.2
(22) Date of filing: 01.10.2013
(51) Int. Cl.: C01G 25/00, B01D 53/86, B01D 53/94, B01J 23/63, F01N 3/10

(54) **COMPLEX OXIDE PARTICLES AND CATALYST FOR PURIFYING EXHAUST GAS USING SAME**

(30) Priority: 22.11.2012 JP 2012256633; 22.03.2013 JP 2013060128
(71) Applicant: TOYOTA JIDOSHA KABUSHIKI KAISHA, Toyota-shi, Aichi-ken, 471-8571 (JP)
(72) Inventor: SAITO Yoshinori, Toyota-shi Aichi 471-8571 (JP); MIURA Masahide, Toyota-shi Aichi 471-8571 (JP)
(74) Representative: Kuhnen & Wacker
(86) International application number: PCT/JP2013/076661
(87) International publication number: WO 2014/080695

(57) **Abstract**

This invention provides complex oxide particles as carriers that are capable of imparting high heat tolerance and oxygen storage capacity to a catalyst and an exhaust gas purifying catalyst for automobiles using the same. The complex oxide particles comprise ceria-zirconia complex oxide, alumina, yttria, and at least one oxide of an element selected from among rare earth elements other than cerium and yttrium and alkaline earth metals, in which alumina content is 70% to 89% by mass relative to the complex oxide particles and yttria content is 0.01% to 0.22% by mole relative to the ceria-zirconia complex oxide.

## Description

### Technical Field

The present invention relates to complex oxide particles as carriers that are capable of imparting high heat tolerance and oxygen storage capacity to a catalyst and an exhaust gas purifying catalyst using the same. More particularly, the present invention relates to an exhaust gas purifying catalyst for automobiles.

### Background Art

Exhaust gas emitted from internal-combustion engines of vehicles or the like contains harmful gases such as carbon monoxide (CO), nitrogen oxide (NOx), and unburned hydrocarbon (HC). As an exhaust gas purifying catalyst (so-called three-way catalyst) for decomposing such harmful gases, a ceria-zirconia complex oxide having oxygen storage capacity (OSC) is used, for example. A substance having oxygen storage capacity (an oxygen storage material) can control the air-fuel ratio (A/F) in a microscopic space by absorbing and releasing oxygen and can suppress a decrease in a purification rate that results from variations in exhaust gas composition. In particular, it is preferable for an exhaust gas purifying catalyst to have high oxygen storage capacity so as to suppress NOx emissions, since NOx generated in a lean atmosphere is reduced with difficulty.

JP H10-182155 A (1998) discloses complex oxide carriers comprising at least one of ceria, zirconia, and a ceria-zirconia complex oxide and alumina, wherein at least one of the ceria, the zirconia, and the ceria-zirconia complex oxide contained in the complex oxide carriers maintains its crystallite diameter at 10 nm or less after the complex oxide carriers are heated in the air at 1,000°C for 5 hours. JP H10-182155 A (1998) also describes, as elements constituting carriers, at least one element selected from among alkaline earth metal elements, including alkali metal and barium, in addition to cerium, zirconium, and aluminum, transition metal elements, including iron, and rare earth metal elements, including lanthanum and yttrium. JP H10-182155 A (1998), however, does not specifically describe preferable contents of the elements other than cerium, zirconium, and aluminum.

The crystallite diameters of the ceria-zirconia complex oxides of most carriers that were actually produced in JP H10-182155 A (1998) are less than 5 nm. In such cases, phase separation of the ceria-zirconia complex oxide advances at high temperatures (1,000°C or higher), causing fluctuations of the atmosphere in which an exhaust gas purifying catalyst for automobiles is actually used, ceria particles cannot be prevented from growing (i.e., crystals are increased), and the oxygen storage capacity may deteriorate.

JP 2003-277059 A describes a ceria-zirconia-based complex oxide comprising CeO₂, ZrO₂, and an oxide of at least one additional element selected from among rare earth elements, alkaline earth elements, and transition elements, which has a regular phase in which cerium ions and zirconium ions are regularly aligned. This publication, however, does not describe the inclusion of alumina in such a ceria-zirconia-based complex oxide.

Also, WO 2007/052821 describes catalyst carrier particles comprising ceria and alumina.

To date, a method of increasing the amounts of oxygen storage materials has been employed as a means for improving the oxygen storage capacity. However, there has been a limit on such method because increased amounts of oxygen storage materials would lead to an increase in the pressure drop of catalysts, and lowered engine performance would become an issue of concern. While alumina, which is the main component constituting an active component support layer, may be substituted with an oxygen storage material, alumina has high heat tolerance, anti-stripping properties, and other properties. Accordingly, simple substitution thereof may cause noble metal sintering, and thus it is not preferable. For example, JP 2010-149112 A discloses an exhaust gas purifying catalyst characterized in that a complex of a noble metal and cerium oxide is coated with lanthanum-containing alumina. If alumina in an active component support layer of the catalyst is substituted with an oxygen storage material, durability may be lowered, and the NOx reduction capacity may be lowered.

Accordingly, conventional oxygen storage materials are insufficient in terms of heat tolerance and the oxygen storage capacity, and oxygen storage materials capable of absorption/release of oxygen with higher efficiency have been desired.

### Summary of the Invention

### Object to Be Attained by the Invention

The present invention provides complex oxide particles as carriers that are capable of imparting high heat tolerance and oxygen storage capacity to catalysts and an exhaust gas purifying catalyst for automobiles using the same.

### Means for Attaining the Object

The present inventors discovered that catalysts could be provided with high heat tolerance and oxygen storage capacity by incorporating 70% to 89% of alumina by mass relative to complex oxide particles, 0.01% to 0.22% of yttria by mole relative to ceria-zirconia complex oxide, and at least one oxide of an element selected from among rare earth elements other than cerium and yttrium and alkaline earth metals into the complex oxide particles comprising ceria-zirconia complex oxide.

Specifically, the present invention includes the following.
(1) Complex oxide particles comprising ceria-zirconia complex oxide, alumina, yttria, at least one oxide of an element selected from among rare earth elements other than cerium and yttrium, and alkaline earth metals,
   wherein the alumina content is 70% to 89% by mass relative to the complex oxide particles and the yttria content is 0.01% to 0.22% by mole relative to ceria-zirconia complex oxide.
(2) The complex oxide particles according to (1), wherein the particle diameter of the ceria-zirconia complex oxide subjected to a durability test at 1,100°C for 5 hours is 5 to 15 nm.
(3) An exhaust gas purifying catalyst comprising noble metals supported on the complex oxide particles according to (1) or (2).

This description includes part or all of the content as disclosed in the description and/or drawings of Japanese Patent Application Nos. 2012-256633 and 2013-060128, which are priority documents of the present application.

### Effects of the Invention

The present invention can provide complex oxide particles as carriers that are capable of imparting high heat tolerance and oxygen storage capacity to catalysts and an exhaust gas purifying catalyst for automobiles using the same.

### Brief Description of the Drawings

Fig. 1 shows an image demonstrating positions of ceria-zirconia complex oxide and alumina in the complex oxide particle carriers of the present invention and in conventional carriers.
Fig. 2 shows the correlation between the ceria-zirconia complex oxide particle diameter (hereafter, it may be referred to as the "ZC particle diameter") after an RL durability test at 1,000°C and the oxygen storage capacity per mole of the cerium element.
Fig. 3 shows the correlation between the ZC particle diameter after an RL durability test at 1,100°C and the oxygen storage capacity per mole of the cerium element.
Fig. 4 shows the correlation between alumina content and ZC particle diameter.
Fig. 5 shows the correlation between yttria content in ceria-zirconia complex oxide and the oxygen storage capacity per mole of the cerium element.
Fig. 6 shows temperature at which the catalysts of Example 7 and Comparative Examples 6 to 9 purify 50% of NOx (T50).
Fig. 7 shows the results of measurement of the capacity of the catalysts of Example 7 and Comparative Examples 6 to 9 for oxygen absorption/release.
Fig. 8 shows specific surface area (SSA) of the materials used for catalyst production after an RL durability test at 1,000°C.
Fig. 9 shows the results of OSC measurement of the materials used for catalyst production.

### Embodiments for Carrying out the Invention

The complex oxide particles of the present invention comprise ceria-zirconia complex oxide, alumina, yttria, and at least one oxide of an element selected from among rare earth elements other than cerium and yttrium and alkaline earth metals in which the alumina content is 70% to 89% by mass relative to the complex oxide particles and the yttria content is 0.01% to 0.22% by mole relative to the ceria-zirconia complex oxide. By increasing the amount of alumina as a diffusion barrier, aggregation between ceria-zirconia complex oxides at high temperatures (e.g., 1,100°C) can be suppressed, particle diameter can be reduced, and oxygen storage capacity can be improved. By adding a particular amount of yttria, also, phase separation of ceria-zirconia complex oxide can be suppressed, and heat tolerance can be improved.

The content of ceria-zirconia complex oxide used for the complex oxide particles of the present invention is preferably 11% to 30% and more preferably 15% to 25% by mass relative to the complex oxide particles, so as to allow ceria-zirconia complex oxides to have adequate contact with each other. The ratio of ceria to zirconia in the ceria-zirconia complex oxide is preferably 1:99 to 99:1, and particularly preferably 10:90 to 50:50 by mass.

From the viewpoint of improvement in the oxygen storage capacity and prevention of decrease of oxygen storage capacity as a result of phase separation of ceria-zirconia complex oxide at high temperatures (e.g., 1,100°C), the particle diameter of the ceria-zirconia complex oxide subjected to the durability test at 1,100°C for 5 hours is preferably 5 to 15 nm, and particularly preferably 7 to 12 nm. The term "the particle diameter of the ceria-zirconia complex oxide" used herein refers to a length between alumina particles or aluminum atoms which are present among ceria and zirconia crystals or particles. Alternatively, the term may refer to a length between ceria-zirconia crystals, particles, or atoms which are dispersed in alumina particles or alumina crystals. The particle diameter of the ceria-zirconia complex oxide may vary as a result of a durability test carried out at high temperatures (e.g., 1,100°C).

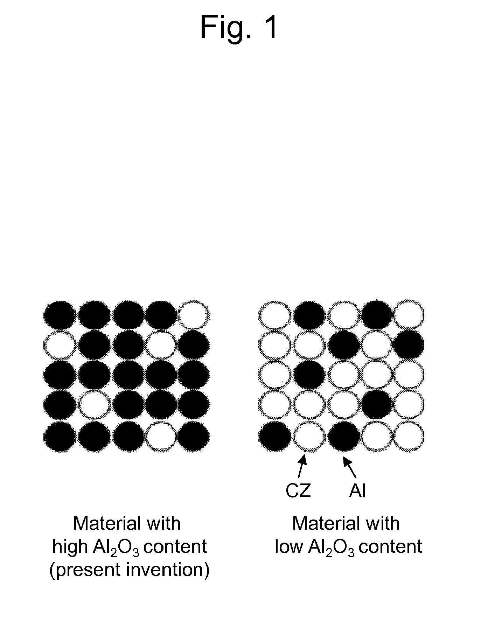

The complex oxide particles of the present invention comprise alumina in an amount of 70% to 89% and preferably 75% to 85% by mass relative to the complex oxide particles. By adjusting the alumina content within the above range, aggregation of ceria-zirconia complex oxide particles at high temperatures (e.g., 1,100°C) can be suppressed, and, as a consequence, the particle diameter of the ceria-zirconia complex oxide can be adjusted within a preferable range (see Fig. 1).

The complex oxide particles of the present invention comprise yttria in an amount of 0.01% to 0.22%, and preferably 0.02% to 0.15% by mole relative to ceria-zirconia complex oxide. By adjusting the yttria content within the above range, phase separation of ceria-zirconia complex oxide at high temperatures (e.g., 1,100°C) can be suppressed, and durability or heat tolerance of the complex oxide particles can be improved. By adjusting the yttria content to 0.22% or less by mole relative to ceria-zirconia complex oxide, decrease of the oxygen storage capacity caused by the stabilized ceria-zirconia structure can be prevented.

The complex oxide particles of the present invention comprise at least one oxide of an element selected from among rare earth elements other than cerium and yttrium and alkaline earth metal elements. Examples of rare earth elements other than cerium and yttrium include scandium (Sc), lanthanum (La), praseodymium (Pr), neodymium (Nd), samarium (Sm), gadolinium (Gd), terbium (Tb), dysprosium (Dy), ytterbium (Yb), and lutetium (Lu). Among them, La is preferable from the viewpoint of retention of heat tolerance of complex oxide particles. From the viewpoint of retention of oxygen storage capacity, the content of an oxide of a rare earth element other than cerium or yttrium is preferably 0.1% to 10%, and particularly preferably 1% to 6% by mass relative to the complex oxide particles.

The complex oxide particles of the present invention serve as carriers and comprise noble metals supported thereon. Thus, the complex oxide particles can be used for an exhaust gas purifying catalyst for automobiles. Accordingly, the present invention also relates to an exhaust gas purifying catalyst comprising the complex oxide particles and noble metals supported thereon. Preferably, the exhaust gas purifying catalyst of the present invention further contains a platinum group noble metal as a main catalyst. Examples of such platinum group noble metal include ruthenium (Ru), rhodium (Rh), palladium (Pd), osmium (Os), iridium (Ir), and platinum (Pt), and the use of Rh, Pt, and Pd is particularly preferable. The amount thereof to be supported may be the same as with the cases of conventional exhaust gas purifying catalysts, and it is preferably 0.01% to 5% by mass relative to the exhaust gas purifying catalyst. Noble metals may be supported on the complex oxide particles via a conventional technique such as adsorption or water absorption.

The exhaust gas purifying catalyst of the present invention can be used for an exhaust gas purifying filter. Specifically, it can be used for a coat provided on the substrate surface of an exhaust gas purifying filter. When a plurality of coats are provided on the substrate surface, the exhaust gas purifying catalyst of the present invention may be used for any layer. In order to effectively elicit oxygen storage capacity, it is preferably used for the outermost layer. From the viewpoint of retention of catalytic activity and improvement in oxygen storage capacity, the particle diameter of the ceria-zirconia complex oxide of the exhaust gas purifying catalyst of the present invention is preferably on the single-nanometer scale.

Hereafter, the present invention is described with reference to the examples, although the technical scope of the present invention is not limited to such examples.

### Examples

### Examples 1 to 6 and Comparative Examples 1 to 5

### [Example 1]

Aluminum nitrate nonahydrate, zirconium oxynitrate dihydrate, cerium nitrate hexahydrate, lanthanum nitrate hexahydrate, and yttrium nitrate hexahydrate were added to and mixed with ion exchange water in the amounts shown in Table 1. A hydrogen peroxide solution was added in an amount 1.2 times the amount of cerium in cerium nitrate in molar terms, and the mixture was agitated to obtain a starting solution. While the pH level of the starting solution was maintained at 9 or higher, the solution was added to an aqueous NH₃ solution (in an amount 1.2 or more times the neutralization equivalent with respect to metal cations) while thoroughly agitating the solution, and components were allowed to coprecipitate to obtain a complex oxide precursor. The obtained complex oxide precursor was centrifuged, thoroughly washed, dried in the air at 150°C for 7 hours, and then precalcined at 330°C for 5 hours. The formed product was ground using a grinder and then calcined in the air at 700°C for 5 hours. Thus, complex oxide particles were obtained.

The resulting complex oxide particles were added to an aqueous rhodium nitrate solution as carriers, and the mixture was agitated. Thereafter, the solution was heated with agitation to evaporate the water, the remaining solid was dehydrated in the air at 120°C for 6 hours, the resultant was subjected to calcination in the air at 500°C for 2 hours, and 0.2% of rhodium by mass was supported on the carriers to obtain the exhaust gas purifying catalyst.

### [Examples 2 to 6]

Complex oxide particles and exhaust gas purifying catalysts were prepared in the same manner as in Example 1, except that aluminum nitrate nonahydrate, zirconium oxynitrate dihydrate, cerium nitrate hexahydrate, lanthanum nitrate hexahydrate, and yttrium nitrate were used in the amounts shown in Table 1.

### [Comparative Examples 1 to 5]

Complex oxide particles and exhaust gas purifying catalysts were prepared in the same manner as in Example 1, except that aluminum nitrate nonahydrate, zirconium oxynitrate dihydrate, cerium nitrate hexahydrate, lanthanum nitrate hexahydrate, and yttrium nitrate were used in the amounts shown in Table 1.

**Table 1**

| | ZrO₂ | CeO₂ | La₂O₃ | Y₂O₃ | Al₂O₃ | Y/ZC | Zr/Ce |
|---|---|---|---|---|---|---|---|
| | Mass % | | | | | mol/mol | mol/mol |
| Ex. 1 | 4.5 | 2 | 5 | 0.2 | 88.3 | 0.047 | 3.14 |
| Ex. 2 | 10 | 4.5 | 5 | 0.5 | 80 | 0.052 | 3.10 |
| Ex. 3 | 16.5 | 7.5 | 5 | 1 | 70 | 0.063 | 3.07 |
| Ex. 4 | 10 | 4.5 | 5 | 1 | 79.5 | 0.105 | 3.10 |
| Ex. 5 | 10 | 4.5 | 5 | 2 | 78.5 | 0.210 | 3.10 |
| Ex. 6 | 16 | 7 | 5 | 2 | 70 | 0.132 | 3.19 |
| Comp. Ex. 1 | 3.4 | 1.45 | 5 | 0.15 | 90 | 0.047 | 3.28 |
| Comp. Ex. 2 | 31 | 14 | 3 | 2 | 50 | 0.068 | 3.09 |
| Comp. Ex. 3 | 46 | 20 | 2 | 2 | 30 | 0.046 | 3.21 |
| Comp. Ex. 4 | 53 | 23 | 1.5 | 2.5 | 20 | 0.050 | 3.22 |
| Comp. Ex. 5 | 10 | 4.5 | 5 | 0 | 80.5 | 0.000 | 3.10 |

### 1. Durability test

Durability tests were carried out by weighing 5 mg of the catalyst powders of Examples 1 to 6 and Comparative Examples 1 to 5 and, while heating the catalyst powders to 1,000°C or 1,100°C, alternately applying 1% by volume of carbon monoxide (CO) gas (the balance gas: nitrogen) and 5% by volume of oxygen (O₂) gas (the balance gas: nitrogen) for 5 minutes, and this procedure was repeated over the period of 5 hours.

RL 1,000°C × 5 hr (1% - CO/N₂ + 10% - H₂O ⇔ 5% - O₂/N₂ + 10% - H₂O)

RL 1,100°C × 5 hr (1% - CO/N₂ + 10% - H₂O ⇔ 5%- O₂/N₂ + 10% - H₂O)

### 2. Measurement of particle diameter

The particle diameter of the ceria-zirconia complex oxide was measured via X-ray diffraction.

### 3. Measurement of OSC

Catalyst powder (2 mg) was weighed and mounted on a flow reactor, gas containing 1% by volume of oxygen (O₂) (the balance gas: nitrogen) was allowed to flow for 2 minutes during heating at 600°C, and gas containing 2% by volume of carbon monoxide (CO) (the balance gas: nitrogen) was pulse-introduced for 2 minutes during heating at 600°C. This procedure was repeated 5 times. Carbon dioxide (CO₂) generated thereupon was detected with the use of an IR analyzer, and the average amount of CO₂ detected during a period of 5 seconds after the introduction of CO₂ was designated the OSC equivalent.

Table 2 shows the particle diameters of the ceria-zirconia complex oxides in the catalysts of Examples 1 to 6 and Comparative Examples 1 to 5 after the RL durability tests carried out at 1,000°C and at 1,100°C.

**Table 2**

| | RL Durability test at 1,000°C (nm) | RL Durability test at 1,100°C (nm) |
|---|---|---|
| Ex. 1 | 4.0 | 5.0 |
| Ex. 2 | 9.0 | 9.9 |
| Ex. 3 | 10 | 10.5 |
| Ex. 4 | 9 | 10 |
| Ex. 5 | 10 | 12 |
| Ex. 6 | 12 | 14 |
| Comp. Ex. 1 | 3.6 | Phase separation |
| Comp. Ex. 2 | 18 | 19 |
| Comp. Ex. 3 | 19 | 22 |
| Comp. Ex. 4 | 20 | 23 |
| Comp. Ex. 5 | 9 | Phase separation |

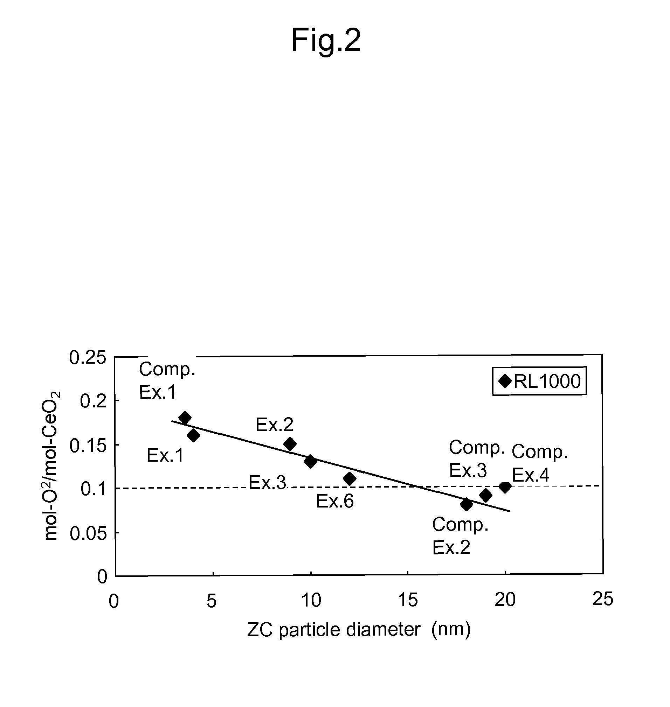

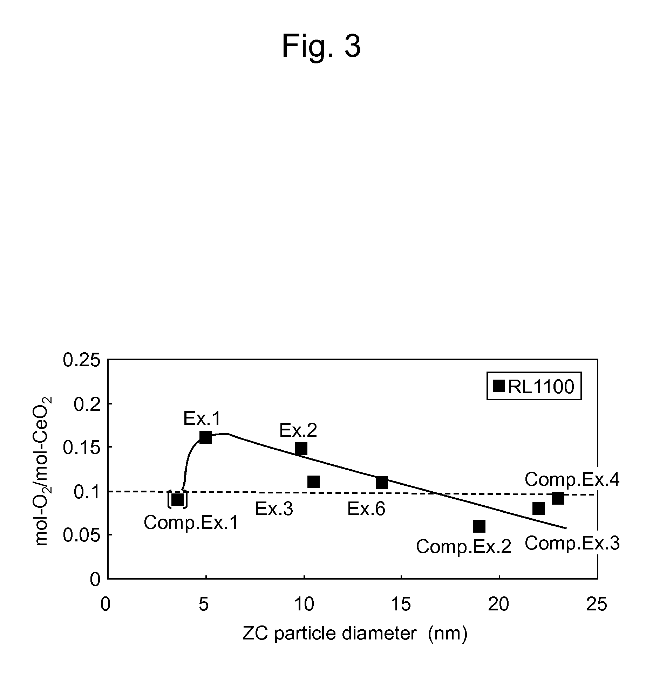

Figs. 2 to 5 show the results. Performance was evaluated to be improved at 0.1 mol - O₂/mol - CeO₂ or higher. In Fig. 3, which relates to the RL test carried out at 1,100°C, the results for the catalyst of Comparative Example 1 are shown in terms of the ZC particle diameter after the RL test carried out at 1,000°C because it underwent phase separation.

Fig. 2 demonstrates that OSC activity improves in accordance with the particle diameter of the ceria-zirconia complex oxide (i.e., the ZC particle diameter) after an RL test carried out at 1,000°C. Also, Fig. 3 demonstrates that OSC activity deteriorates as a result of an RL test carried out at 1,100°C on the basis of phase separation occurring when the ZC particle diameter is less than 5 nm. As is apparent from Fig. 2 and Fig. 3. OSC activity improves when the ZC particle diameter is from 5 nm to 15 nm.

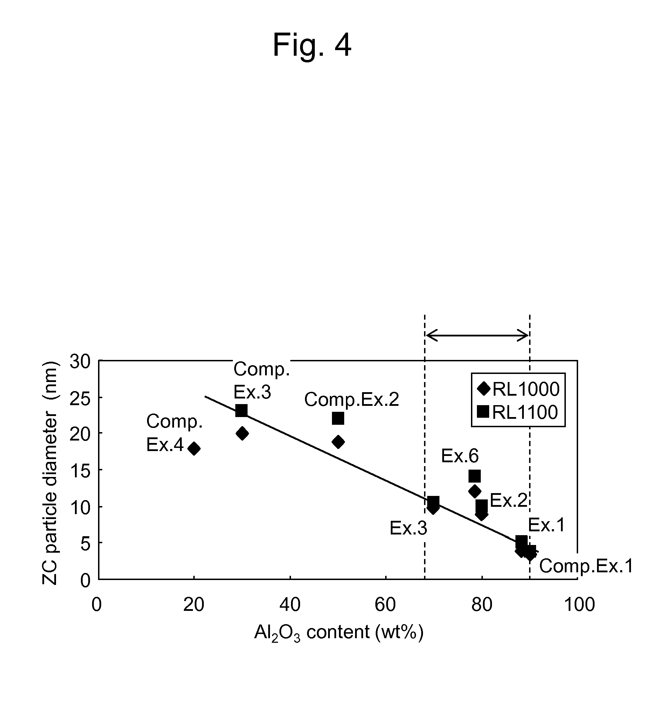

Fig. 4 demonstrates that a ZC particle diameter preferable in terms of OSC activity is attained when alumina content is 70% to 89% by mass relative to the complex oxide particles.

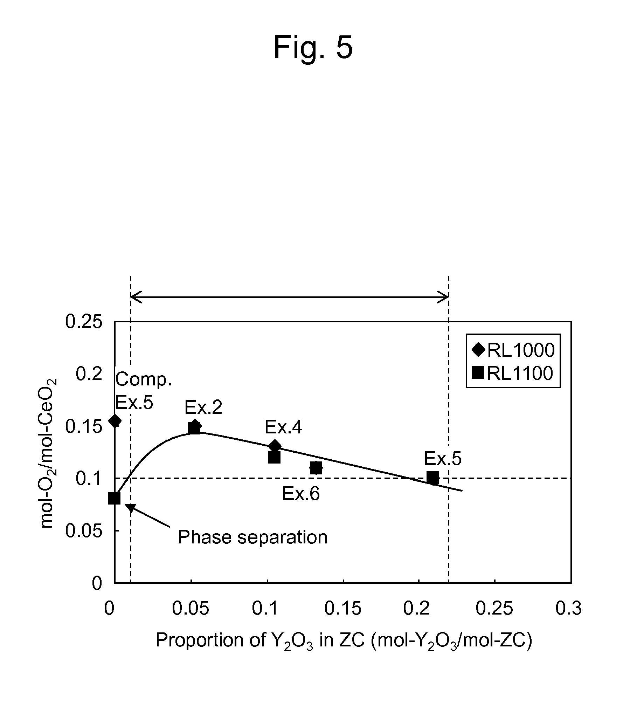

As shown in Fig. 5, only the catalyst of Comparative Example 5 containing no yttrium underwent phase separation when subjected to the RL test at 1,100°C. This indicates that the addition of yttrium results in suppression of Z-C phase separation and improved durability (i.e., heat tolerance) of microparticles. Activity deteriorated when yttria content exceeded 0.22 relative to ceria-zirconia complex oxide.

### Example 7 and Comparative Examples 6 to 9

### [Example 7]

### (Preparation of Material A)

After aluminum nitrate nonahydrate was dissolved in ion exchange water, zirconium oxynitrate dihydrate, cerium nitrate hexahydrate, lanthanum nitrate hexahydrate, and yttrium nitrate hexahydrate were added thereto in the amounts shown in Table 3. The hydrogen peroxide solution was added in an amount 1.2 times the amount of cerium in cerium nitrate in molar terms, and the mixture was agitated to obtain a starting solution. While maintaining the pH level at 9 or higher, the starting solution was added to an aqueous NH₃ solution (in an amount 1.2 or more times the neutralization equivalent with respect to metal cations) with thorough agitation, and components were allowed to coprecipitate to obtain a complex oxide precursor. The obtained complex oxide precursor was centrifuged, thoroughly washed, dried in the air at 150°C for 7 hours, and then precalcined at 330°C for 5 hours. The formed product was ground using a grinder and then calcined in the air at 700°C for 5 hours. Thus, complex oxide particles were obtained (Material A).

### (Under layer coating)

A ceramic honeycomb substrate having a large number of wall-partitioned cells (ϕ 103 mm; L 105 mm; volume 875 cc) was used.

Pd (1.0 g/substrate-L (per liter of a substrate)) was supported by impregnation on 75 g/substrate-L of ceria-zirconia complex oxide powder (hereafter, abbreviated as "CZ") (ZrO₂: 68 wt%; CeO₂: 30 wt%; Y₂O₃: 2 wt%) with the use of a palladium nitrate solution. Subsequently, the Pd-supporting CZ powder was added to 75 g/substrate-L of La-supplemented Al₂O₃ (Al₂O₃: 96 wt%; La₂O₃: 4 wt%) and 3 g/substrate-L of Al₂O₃ binder. water was further added to mix these components, and a coating slurry was prepared. The resulting slurry was applied to the ceramic honeycomb substrate via wash coating, and an underlying catalyst layer was then formed on the cell surface of the honeycomb substrate through dehydration and calcination (at 500°C for 2 hours).

### (Upper layer coating)

Rh (0.1 g/substrate-L) was supported by impregnation on 50 g/substrate-L of CZ powder (ZrO₂: 78 wt%; CeO₂: 20 wt%; Y₂O₃: 2 wt%) with the use of a rhodium nitrate solution. Subsequently, the Rh-supporting CZ powder was added to 50 g/substrate-L of Material A and 3 g/substrate-L of Al₂O₃ binder, water was further added to mix these components, and a coating slurry was prepared. The resulting slurry was applied to the ceramic honeycomb substrate provided with the under layer coating, and the catalyst was then obtained through dehydration and calcination (at 500°C for 2 hours).

### [Comparative Example 6]

A catalyst was obtained in the same manner as in Example 7, except that 50 g/substrate-L of La-supplemented Al₂O₃ (Al₂O₃: 96 wt%; La₂O₃: 4 wt%) (hereafter, abbreviated as "Al₂O₃") was used instead of Material A for the upper layer coating of Example 7.

### [Comparative Example 7]

A catalyst was obtained in the same manner as in Example 7, except that 40.8 g/substrate-L of CZ powder (ZrO₂: 73.5 wt%; CeO₂: 24.5 wt%; Y₂O₃: 2 wt%) was used instead of 50 g/substrate-L of CZ powder (ZrO₂: 78 wt%; CeO₂: 20 wt%; Y₂O₃: 2 wt%), to bring the amount of Ce to the same level as that in Example 7, and 50 g/substrate-L of Al₂O₃ was used instead of Material A for the upper layer coating.

### [Comparative Example 8]

### (Preparation of Material B)

After aluminum nitrate nonahydrate was dissolved in ion exchange water, zirconium oxynitrate dihydrate, cerium nitrate hexahydrate, lanthanum nitrate hexahydrate, and yttrium nitrate hexahydrate were added thereto in the amounts shown in Table 3. The hydrogen peroxide solution was added in an amount 1.2 times the amount of cerium in cerium nitrate in molar terms, and the mixture was agitated to obtain a starting solution. While maintaining the pH level at 9 or higher, the starting solution was added to an aqueous NH₃ solution (in an amount 1.2 or more times the neutralization equivalent with respect to metal cations) with thorough agitation, and components were allowed to coprecipitate to obtain a complex oxide precursor. The obtained complex oxide precursor was centrifuged, thoroughly washed, dried in the air at 150°C for 7 hours, and then precalcined at 330°C for 5 hours. The formed product was ground using a grinder and then calcined in the air at 700°C for 5 hours. Thus, complex oxide particles were obtained (Material B).

A catalyst was obtained by forming an under layer coat and an upper layer coat in the same manner as in Example 7, except that 16 g/substrate-L of Material B was used, to bring the amount of Ce to the level same as that in Example 7, and 34 g/substrate-L of Al₂O₃ was used instead of Material A.

### [Comparative Example 9]

A catalyst was obtained in the same manner as in Example 7, except that 50 g/substrate-L of CZ powder (ZrO₂: 78 wt%; CeO₂: 20 wt%; Y₂O₃: 2 wt%) was used instead of Material A for the upper layer coating.

Table 3 shows the compositions of Material A and Material B and particle diameters thereof (RL test carried out at 1,100°C for 5 hours, measured in the manner described in "1. Durability test").

**Table 3**

| | ZrO₂ | CeO₂ | La₂O₃ | Y₂O₃ | Al₂O₃ | CZ particle diameter (nm) (RL 1,100°C × 5 hr) |
|---|---|---|---|---|---|---|
| | Mass % | | | | | |
| Material A | 10 | 4.5 | 5 | 0.5 | 80 | 9.9 |
| Material B | 31 | 14 | 3 | 2 | 50 | 22 |

Table 4 shows the compositions of upper layer coats of the catalysts of Example 7 and Comparative Examples 6 to 9.

**Table 4**

| | Rh layer (upper layer) constitution | Total amount of CeO₂ in upper layer (g/l) | Note |
|---|---|---|---|
| Comp Ex. 6 | Rh/CeO₂ - ZrO₂ (CeO₂ = 20 wt%) + Al₂O₃ | 10 | Conventional material |
| Ex. 7 | Rh/CeO₂ - ZrO₂ (CeO₂ = 20 wt%) + Material A | 12.3 | Material A (CZ particle diameter: 9.9 nm) |
| Comp. Ex. 7 | Rh/CeO₂ - ZrO₂ (CeO₂ = 24.5 wt%) + Al₂O₃ | 12.3 | Increased amount of CeO₂ relative to Comp. Ex. 6 |
| Comp. Ex. 8 | Rh/CeO₂ - ZrO₂ (CeO₂ = 20 wt%) + Material B + Al₂O₃ | 12.3 | Material B (CZ particle diameter: 22 nm) |
| Comp. Ex. 9 | Rh/CeO₂ - ZrO₂ (CeO₂ =20 wt%) + CeO₂ - ZrO₂ (CeO₂ = 20 wt%) | 20 | Replacement of Al₂O₃ of Comp. Ex. 6 with OSC material (CeO₂-ZrO₂) |

The catalysts of Example 7 and Comparative Examples 6 to 9 were subjected to durability tests, activity evaluation, and measurement of oxygen absorption/release in the manner described below.

### [Durability Test]

The catalysts of Example 7 and Comparative Examples 6 to 9 were subjected to durability tests with the use of the engines for practical use. Specifically, the catalysts were mounted on the exhaust system of a V8 engine, and rich, stoichiometric, and lean exhaust gases were repeatedly applied thereto for a given period of time at a catalyst bed temperature of 1,000°C over a period of 50 hours.

### [Activity Evaluation]

Activities of the catalysts of Example 7 and Comparative Examples 6 to 9 subjected to the durability tests were further evaluated. Stoichiometric (air-fuel (A/F) ratio: 14.6) exhaust gas was supplied to the catalysts, temperature was raised to 500°C, and the temperature at which the purification rate would reach 50% (T50) was calculated.

### [Measurement of oxygen absorption/release]

The capacities of the catalysts of Example 7 and Comparative Examples 6 to 9 for oxygen absorption/release were evaluated. The catalysts were mounted immediately below in-line four-cylinder engines, the air-fuel (A/F) ratio of the exhaust gas introduced into the catalyst was periodically switched between a rich atmosphere and a lean atmosphere at a catalyst-containing gas temperature of 600°C, and the amount of oxygen absorption/release of each catalyst was calculated based on a delay in the behavior of the O₂ sensor provided on the catalyst outlet side.

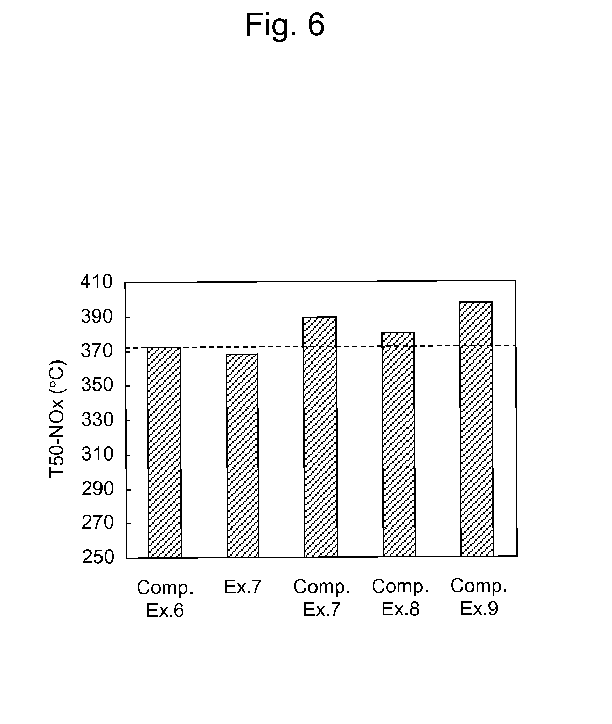

The results are shown in Figs. 6 to 9.

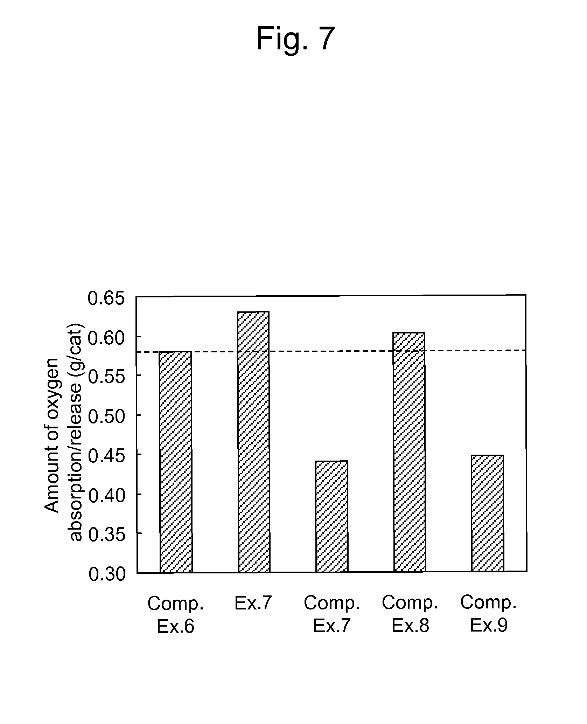

Figs. 6 and 7 demonstrate that the catalyst of Example 7 maintains activity of the catalyst of Comparative Example 6 having a general catalyst structure (Fig. 6) and that it has oxygen storage capacity superior to that of the catalyst of Comparative Example 6 (Fig. 7). In comparison with the catalysts of Comparative Examples 7 to 9 having equivalent or larger amounts of Ce, Material A was found to be the most effective in terms of maintenance of activity and improvement in oxygen storage capacity.

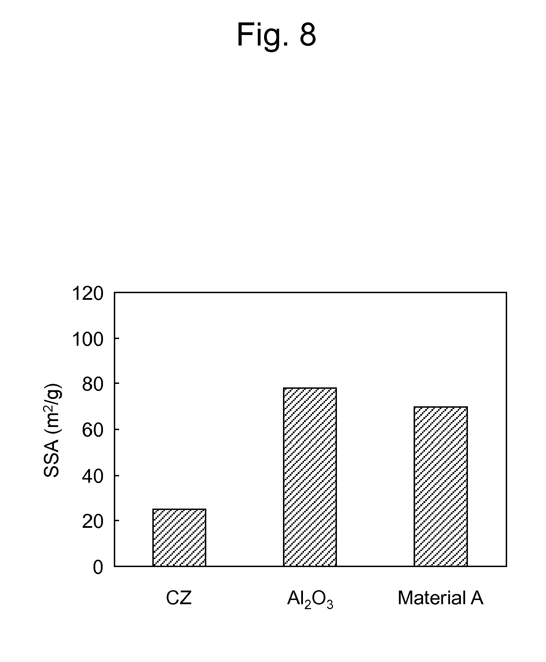

Fig. 8 shows the specific surface area (SSA) after the materials used for catalyst production were subjected to RL durability tests at 1,000°C. Because of the heat tolerance of Al₂O₃ is higher than that of CZ particles, Rh sintering (aggregation) is suppressed. As a result, the catalyst of Comparative Example 6 comprising Al₂O₃ is considered to have activity and capacity for oxygen absorption/release superior to those of the catalyst of Comparative Example 9 comprising CZ particles instead of Al₂O₃. As shown in Fig. 8, also, Material A has heat tolerance equivalent to that of Al₂O₃. Thus, the catalyst of Example 7 comprising Material A instead of Al₂O₃ is considered to retain activity of the catalyst of Comparative Example 6.

As is apparent from Figs. 6 and 7, further, the catalyst of Comparative Example 8 having a larger CZ particle diameter cannot yield the effects described above in relation to the catalyst of Example 7. If the CZ particle diameter is on the single nanometer-scale as with the case of the catalyst of Example 7, the oxygen storage capacity can improve even if a noble metal is not directly supported on a CZ particle. Similar effects may be attained with the use of Material A for the under layer coating (a Pd layer).

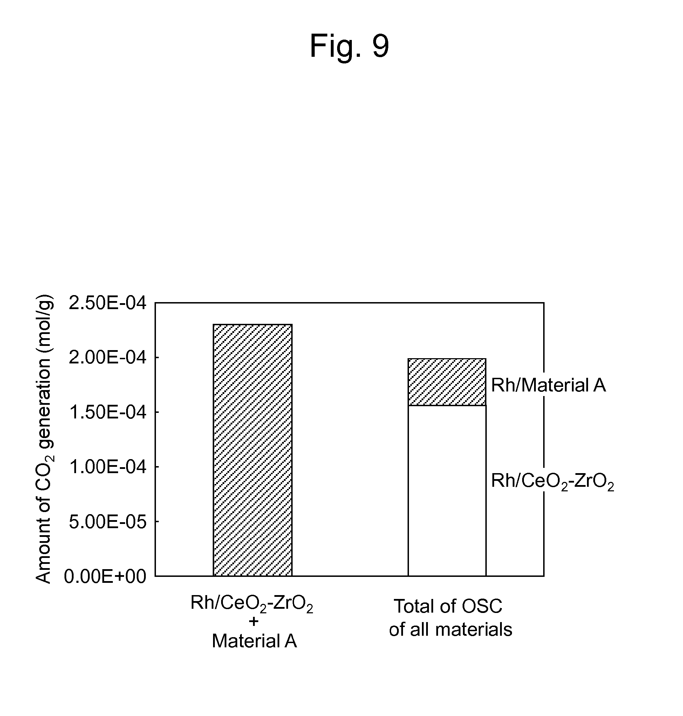

Fig. 9 shows the results of measurement of oxygen storage capacity after RL durability tests at 1,100°C of a sample prepared by physical mixing of the Rh-supporting CZ powder of Example 1 with Material A with the use of a model gas and Material A comprising Rh-supporting CZ powder and Rh supported thereon via impregnation (pellets supporting 0.2% by mass of Rh). RL durability tests at 1,100°C and measurement of oxygen storage capacity were carried out in accordance with the procedures described in [1. Durability Test] and [3. OSC Measurement] above. As is apparent from Fig. 9, oxygen storage capacity can be remarkably improved with the use of CZ powders in combination with Material A compared with the oxygen storage capacity attained when CZ powders or Material A is used separately from each other.

### [Industrial Applicability]

The complex oxide particles of the present invention can be preferably used for an exhaust gas purifying catalyst, and particularly for an exhaust gas purifying catalyst for automobiles.

All publications, patents, and patent applications cited herein are incorporated herein by reference in their entirety.

## Claims

1. Complex oxide particles comprising ceria-zirconia complex oxide, alumina, yttria, at least one oxide of an element selected from among rare earth elements other than cerium and yttrium, and alkaline earth metals,
wherein the alumina content is 70% to 89% by mass relative to the complex oxide particles and the yttria content is 0.01% to 0.22% by mole relative to ceria-zirconia complex oxide.

2. The complex oxide particles according to claim 1, wherein the particle diameter of the ceria-zirconia complex oxide subjected to a durability test at 1,100°C for 5 hours is 5 to 15 nm.

3. An exhaust gas purifying catalyst comprising noble metals supported on the complex oxide particles according to claim 1 or 2.
